(19) Europäisches Patentamt
European Patent Office
Office européen des brevets

(11) Veröffentlichungsnummer: **0 187 330**
B1

(12) **EUROPÄISCHE PATENTSCHRIFT**

(45) Veröffentlichungstag der Patentschrift: **26.09.90**

(21) Anmeldenummer: **85116196.8**

(22) Anmeldetag: **18.12.85**

(51) Int. Cl.$^5$: **C 08 G 18/62**, C 08 G 18/66, C 08 G 18/00

# (54) Stabile Dispersionen von Polyharnstoffen und/oder Polyhydrazodicarbonamiden in höhermolekularen, mindestens eine Hydroxylgruppe aufweisenden Hydroxylverbindungen, ein Verfahren zu ihrer Herstellung und ihre Verwendung zur Herstellung von Polyurethankunststoffen.

(30) Priorität: **08.01.85 DE 3500339**

(43) Veröffentlichungstag der Anmeldung: **16.07.86 Patentblatt 86/29**

(45) Bekanntmachung des Hinweises auf die Patenterteilung: **26.09.90 Patentblatt 90/39**

(84) Benannte Vertragsstaaten: **AT BE CH DE FR GB IT LI NL SE**

(56) Entgegenhaltungen:
**EP-A-0 152 862**
**US-A-3 714 128**
**US-A-4 089 835**
**US-A-4 523 025**

**CHEMICAL ABSTRACTS, Band 65, Nr. 1, 1966, Zusammenfassung Nr. 830b, Columbus, Ohio, US; & SU-A-178 101 (O.Ya. FEDOTOVA et al.) 08-01-1966**

(73) Patentinhaber: **BAYER AG**
**D-5090 Leverkusen 1 Bayerwerk (DE)**

(72) Erfinder: **Dietrich, Manfred, Dr.**
**Dresdener Strasse 16**
**D-5090 Leverkusen 1 (DE)**
Erfinder: **König, Klaus, Dr,**
**Heymannstrasse 50**
**D-5090 Leverkusen 1 (DE)**
Erfinder: **Hettel, Hans, Dr.**
**Hahnenweg 5**
**D-5000 Köln 80 (DE)**
Erfinder: **Seifert, Peter, Dr.**
**Zimmergrundstrasse 6**
**D-3590 Bad Wildungen (DE)**
Erfinder: **Vehlewald, Peter, Dr.**
**Fasanenstrasse 20**
**D-5653 Leichlingen 1 (DE)**

**EP 0 187 330 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Stabile Dispersionen von Polyharnstoffen und Polyhydrazodicarbonamiden in Polyolen ("PHD-Polyole") haben als Ausgangsprodukte zur Herstellung von Polyurethan-Weichschaumstoffen, -Integralschaumstoffen für Stoßstangen, Schuhsohlen, Mopedsättel, zur Herstellung von Verklebungen, Beschichtungen, Fugenvergußmassen usw. große Bedeutung erlangt. Insbesondere in den USA werden für die Automobilindustrie Vollschaumsitze aus PHD-Polyolen hergestellt.

Für die Herstellung solcher Dispersionen durch Umsetzung von organischen Polyisocyanaten mit primäre und/oder sekundäre Aminogruppen aufweisenden Polyaminen und/oder Hydrazinen und/oder Hydraziden in höhermolekularen Polyolen sind im Laufe der letzten 20 Jahre verschiedene Verfahren bekannt geworden.

Gemäß DE-AS 1 260 142 können z.B. derartige Dispersionen hergestellt werden, indem die Aminkomponente im Polyether gelöst vorgelegt und das Diisocyanat bei Raumtemperatur eingetropft wird. Schon geringe Mengen des Polyadditionsproduktes (2 - 5%) führen dabei allerdings zu einer beachtlichen Viskositätserhöhung. Die für heutige Anwendungen besonders wichtigen Polyether mit vorwiegend primären Hydroxylgruppen sind in dieser Anmeldung nicht erwähnt.

Nach DE-PS 2 513 815, 2 550 833 und 2 550 862 werden niedrigviskose, stabile Dispersionen von Polyharnstoffen und/oder Polyhydrazodicarbamiden in situ in der Weise hergestellt, daß die Umsetzung organischer Polyisocyanate mit primären und/oder sekundären Aminogruppen aufweisenden Polyaminen und/oder Hydrazinen und/oder Hydraziden in höhermolekularen Polyolen kontinuierlich in einem Durchflußmischer erfolgt und das den Durchflußmischer verlassende Produkt in einer Vorlage nachreagiert, wobei gleichzeitig oder anschließend gegebenenfalls vorhandenes Wasser im Vakuum entfernt wird. Polyharnstoffdispersionen können auch nach weiteren Verfahren diskontinuierlich hergestellt werden, die in DE-OS 2 550 796 bzw. DE-OS 2 550 797 beschrieben sind. Hierbei werden durch anteilige Mitverwendung von Wasser als Reaktionsmedium ebenfalls niedrige Viskositäten erzielt.

Im wesentlichen haben jedoch nur Produkte, die nach der Lehre der DE-PS 2 513 815 hergestellt werden, in der Technik Bedeutung erlangt.

Im Vergleich zu den reinen Polyethern (und anderen Polyolen) ergeben die Polyharnstoffdispersionen als Ausgangsprodukte Polyurethankunststoffe mit mannigfaltigen Vorteilen. So wird zum Beispiel die Verschäumungssicherheit sowohl beim Weichschaumblock als auch beim Kaltformschaum erhöht; zudem wird eine günstigere Härte/Rohdichterelation der Schaumstoffqualitäten erreicht. Bei Integralschaumstoffen wird Modul und Steifigkeit, bei Verklebungen die Haftung verbessert. Die Anforderungen an Schaumstoffe in Bezug auf sehr hohe Härte (Tragfähigkeit bei carpet underlay-Qualitäten) sind insbesondere in den USA in den letzten Jahren weiter gestiegen. Deshalb war die Weiterentwicklung von Dispersionen mit hohen Füllstoffgehalten bei gleichzeitig niedrigen Viskositäten notwendig, da die Produkte des Standes der Technik diesen Anforderungen nicht oder nur ungenügend erfüllten, insbesondere dann, wenn zur Herstellung der Dispersionen als Isocyanatkomponente preisgünstiger einstehende Polyphenyl-polymethylen-polyisocyanate ("rohes MDI") eingesetzt werden.

In weiterer Entwicklung der verschiedenen Verfahren wurde nun überraschenderweise gefunden, daß Dispersionen mit hohen Füllstoffgehalten und niedrigen Viskositäten — insbesondere auch bei Verwendung von Polyphenyl-polymethylen-polyisocyanaten ("rohes MDI") als Ausgangsmaterial — erhalten werden, die die gewünschten und geforderten Eigenschaftsverbesserungen bei den daraus hergestellten Polyurethan-Kunststoffen ergeben, wenn zu ihrer Herstellung als aminische Komponente ausschließlich oder zu einem hohen Anteil im folgenden näher beschriebene Additionsprodukte von Acrylnitril an Hydrazin und/oder aliphatische Di- und/oder Polyamine eingesetzt werden. Gegenstand der vorliegenden Erfindung sind somit stabile Dispersionen von Polyharnstoffen und/oder Polyhydrazodicarbonamiden in höhermolekularen, mindestens eine Hydroxylgruppe aufweisenden Hydroxylverbindungen, vorzugsweise Polyethern, mit Feststoffgehalten von 5 bis 50 Gew.-%, erhalten durch Umsetzung von

a) Polyisocyanaten, gegebenenfalls in Mischung mit bis zu 40 Mol-% Monoisocyanaten, mit

b) primäre und/oder sekundäre Aminogruppen aufweisenden Polyaminen und/oder Hydrazinen und/oder Hydraziden, gegebenenfalls in Mischung mit bis zu 40 Mol-% Monoaminen oder Alkanolaminen, wobei Komponente b) zu mindestens 50 Gew.-% aus Additionsprodukten von Acrylnitril an Hydrazin und/oder an aliphatische, cycloaliphatische oder araliphatische mindestens zwei primäre Aminogruppen enthaltende Di- oder Polyamine besteht, zu deren Herstellung pro Mol Dioder Polyamin mindestens 1 Mol Acrylnitril und für jedes der in den Di- oder Polyaminen enthaltenen Stickstoffatome höchstens 1 Mol Acrylnitril eingesetzt worden ist, bei Temperaturen von 20 bis 170°C und einem Äquivalentverhältnis der Komponenten a) und b) zwischen 0,8 und 1,5 in

c) mindestens eine Hydroxylgruppe aufweisenden höhermolekularen Hydroxylverbindungen mit einem mittleren Molekulargewicht von 200 bis 16.000, gegebenenfalls

d) in Gegenwart von Wasser, niedermolekularen Hydroxylverbindungen, Katalysatoren, Flammschutzmitteln und weiteren Hilfsmitteln.

Erfindungsgemäß bevorzugt sind solche stabile Dispersionen, bei denen die Komponente c) aus höhermolekularen Polyethern besteht, deren OH-Gruppen zu mindestens 95% sekundär sind, erhalten mit Feststoffgehalten von 5 bis 30 Gew.-% bei einem Äquivalentverhältnis der Komponenten a) und b)

zwischen 0,8 und 1,5 und mit Feststoffgehalten von 30 bis 50 Gew.-% bei einem Äquivalentverhältnis zwischen 0,8 und 1,3.

Erfindungsgemäß bevorzugt sind ferner solche stabile Dispersionen, bei denen die Komponente c) aus höhermolekularen Polyethern besteht, deren OH-Gruppen zu mindestens 20% primär sind, erhalten mit Feststoffgehalten von 5 bis 15 Gew.-% bei einem Äquivalentverhältnis der Komponenten a) und b) zwischen 0,8 und 1,3 und mit Feststoffgehalten von 15 bis 40 Gew.-% bei einem Äquivalentverhältnis zwischen 0,8 und 1,1.

Die Erfindung betrifft auch ein Verfahren zur Herstellung von stabilen Dispersionen von Polyharnstoffen und/oder Polyhydrazodicarbonamiden in mindestens eine Hydroxylgruppe aufweisenden höhermolekularen Hydroxylverbindungen, vorzugsweise Polyethern, mit Feststoffgehalten von 5 bis 50 Gew.-%, durch Umsetzung von Polyisocyanaten mit primäre und/oder sekundäre Aminogruppen aufweisenden Polyaminen und/oder Hydrazinen und/oder Hydraziden in mindestens eine Hydroxylgruppe aufweisenden höhermolekularen Hydroxylverbindungen, dadurch gekennzeichnet, daß man

a) Di- oder Polyisocyanate, gegebenenfalls in Mischung mit bis zu 40 Mol-% Monoisocyanaten, kontinuierlich oder diskontinuierlich mit

b) primäre und/oder sekundäre Aminogruppen aufweisenden Polyaminen und/oder Hydrazinen und/oder Hydraziden, gegebenenfalls in Mischung mit bis zu 40 Mol-% Monoaminen oder Alkanolaminen, wobei Komponente b) zu mindestens 50 Gew.-% aus Additionsprodukten von Acrylnitril an Hydrazin und/oder an aliphatische, cycloaliphatische oder araliphatische mindestens 2 primäre Aminogruppen enthaltende Di- oder Polyamine besteht, bei deren Herstellung pro Mol Di- oder Polyamin mindestens 1 Mol Acrylnitril und für jedes der in den Di- oder Polyaminen enthaltenen Stickstoffatome höchstens 1 Mol Acrylnitril eingesetzt worden ist, bei einem Äquivalentverhältnis der Komponenten a) und b) zwischen 0,8 und 1,5 und bei Temperaturen von 20 bis 170°C in

c) mindestens eine Hydroxylgruppe aufweisenden höhermolekularen Hydroxylverbindungen mit einem mittleren Molekulargewicht von 200 bis 16.000, gegebenenfalls

d) in Gegenwart von Wasser, niedermolekularen Alkoholen, Katalysatoren, Flammschutzmitteln und weiteren Hilfsmitteln umsetzt.

Erfindungsgemäß bevorzugt ist ein solches Verfahren, bei dem die Umsetzung der Komponenten a) mit b) in Komponente c), gegebenenfalls in Gegenwart von Komponente d), kontinuierlich durchgeführt wird.

Die Erfindung betrifft schließlich auch ein Verfahren zur Herstellung von gegebenenfalls geschäumten Polyurethankunststoffen, insbesondere von Weichschaumstoffen, durch Umsetzung von Polyisocyanaten mit höhermolekularen Hydroxylverbindungen, gegebenenfalls in Gegenwart von Wasser und/oder leichtflüchtigen organischen Substanzen als Treibmittel sowie gegebenenfalls unter Mitverwendung von Katalysatoren, Schaumhilfs- und Zusatzmitteln und Kettenverlängerungs- und/oder Vernetzungsmitteln, dadurch gekennzeichnet, daß als höhermolekulare Hydroxylverbindungen ausschließlich oder anteilweise die erfindungsgemäßen Dispersionen eingesetzt werden.

Für die Erfindung werden eingesetzt:

Als Ausgangskomponenten a) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\,(NCO)_n$$

in der

n = 2 - 4, vorzugsweise 2,

und

Q einen aliphatischen Kohlenwasserstoffrest mit 2 - 18, vorzugsweise 6 - 10 C-Atomen,
einen cycloaliphatischen Kohlenwasserstoffrest mit 4 - 15, vorzugsweise 5 - 13 C-Atomen,
einen aromatischen Kohlenwasserstoffrest mit 6 - 15, vorzugsweise 6 - 13 C-Atomen,
oder einen araliphatischen Kohlenwasserstoffrest mit 8 - 15, vorzugsweise 8 - 13 C-Atomen,

bedeuten, z.B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylen-polyisocyanate, wie sie durch Anilin-Formaldehyd-Kondensation und anschließende phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften

2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der Deutschen Patentschrift 2 009 179 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocynanate, einzusetzen. Ferner ist es möglich, beliebige Mischungen der vorgenannten Polyisocyanate zu verwenden.

Bevorzugt werden in der Regel die technisch leicht zugänglichen polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Geeignete monofunktionelle Isocyanate, die gegebenenfalls bis zu 40 Mol-% mitverwendet werden können, sind z.B. Alkylisocyanate wie Methyl-, Ethyl-, Isopropyl-, Isobutyl-, Hexyl-, Lauryl- und Stearylisocyanat, Chlorhexylisocyanat, Cyclohexylisocyanat, Phenylisocyanat, Tolylisocyanat, 4-Chlorphenylisocyanat und Diisopropylphenylisocyanat.

Als Ausgangskomponenten b) Additionsprodukte ("Michael-Addukte") von Acrylnitril an Hydrazin und/oder aliphatische, cycloaliphatische oder araliphatische, mindestens zwei primäre Aminogruppen enthaltende Di- und/oder Polyamine, wobei zur Herstellung der Additionsverbindungen pro Mol Di- oder Polyamin mindestens 1 Mol Acrylnitril und max. die Zahl an Molen Acrylnitril, die der Zahl der in den Di- und/oder Polyaminen enthaltenen Aminogruppen entspricht, eingesetzt werden.

Als Ausgangsamine für die Herstellung der Additionsverbindungen können eingesetzt werden: Ethylendiamin, Diethylentriamin, Triethylentetramin, 1,2- und 1,3-Propylen-diamin sowie entsprechende Dipropylentriamine und Tripropylentetramine, 1,4-Diaminobutan, 1,6-Diaminohexan, 3-Methyl-1,5-diaminopentan, 1,8-Diaminooctan, Trimethyl-1,6-diaminohexan (Isomerengemisch 2,2,4 und 2,4,4), 3,3'-Bisaminopropyl-methylamin, N,N'-Bis-2-aminoethylpiperazin, 1-Amino-3,3,5-trimethyl-5-aminomethyl-cyclohexan, 4,4'-Diamino-dicyclohexylmethan und -propan, 1,4-Diaminocyclohexan, 2,4- und 2,6-Hexahydrotoluylendiamin, 3,3'-Dimethyl-4,4'-diamino-dicyclohexylmethan etc. Selbstverständlich können die genannten Verbindungen im Gemisch verwendet werden.

Die Herstellung der Additionsverbindungen aus den genannten Aminen und Acrylnitril in den angegebenen Molverhältnissen erfolgt nach bekannten Verfahren, die z.B. in "Organic Reactions V, Chapter 2, Cyanoethylation" beschrieben sind. Üblicherweise legt man das Amin bei −20° bis 50°C vor und tropft das Acrylnitril unter Kühlung zu. Da stets Aminogruppen im Überschuß vorhanden sind, wird das Acrylnitril rasch verbraucht; ein längeres Nachrühren bei höheren Temperaturen ist nicht erforderlich. Da die Umsetzungen sehr rasch verlaufen, sind auch kontinuierliche Verfahrensweisen einfach durchzuführen, sofern man dafür sorgt, daß die beachtliche Reaktionswärme ausreichend abgeführt werden kann. Für die Umsetzung können Hydrazin und Diamine gegebenenfalls in Form ihrer wäßrigen Lieferformen eingesetzt werden. Nach erfolgter Umsetzung kann das Wasser gewünschtenfalls im Vakuum entfernt werden.

Die Additionsprodukte stellen in der Regel Gemische dar und werden vorzugsweise als solche eingesetzt. Gegebenenfalls können die Reaktionsprodukte durch Andestillieren, Destillieren oder andere Verfahren gereinigt werden.

Wie schon erwähnt, können im Gemisch mit den genannten Additionsprodukten bis zu 50 Gew.-% anderer Amine wie Hydrazin, Di- und Polyamine und bis zu 40 Mol-% an Monoaminen oder Alkanolaminen bei der Herstellung der Dispersionen eingesetzt werden. Als Di- und Polyamine seien neben den schon zur Herstellung der "Michael-Addukte" genannten weiterhin erwähnt: N,N-Dimethyl-ethylendiamin, Piperazin, 4-Aminobenzylamin, 4-Aminophenylethylamin, o-, m-, p-Phenylendiamin, 2,4- und/oder 2,6-Toluylendiamin, 4,4'-Diamino-diphenylmethan gegebenenfalls im Gemisch mit höheren Anilin/Formaldehyd-Kondensaten, an einem Stickstoff substituierte 1,3-Propylendiamine, wie sie z.B. durch Addition von Acrylnitril an primäre Monoamine und anschließende Reduktion erhalten werden, disekundäre Diamine, wie sie bei der katalytischen Hydrierung von diprimären aliphatischen Diaminen in Gegenwart von Aldehyden und Ketonen erhalten werden.

Als Monoamine seien z.B. Alkyl- und Dialkylamine mit $C_1$-$C_{18}$-Alkylgruppen, cycloaliphatische Amine

wie Cyclohexylamin und Homologe, Anilin und N-Alkylaniline sowie am Benzolkern substituierte Anilinderivate sowie Diamine mit einer tertiären und einer primären bzw. sekundären Aminogruppe, wie z.B. N,N-Dimethyl-ethylendiamin und N-Methylpiperazin genannt. Als monofunktionelle Hydrazinderivate und Hydrazide kommen z.B. N,N-Dialkylhydrazine, die Hydrazide von Monocarbonsäuren, Hydrazinmonocarbonsäureester der monofunktionellen Alkohole oder Phenole sowie Semicarbazide wie z.B. Methyl-, Ethyl-, Propyl-, Butyl-, Hexyl-, Dodecyl-, Stearyl-, Phenyl- und Cyclohexyl-semicarbazid in Betracht.

Als Alkanolamine seien z.B. Ethanolamin, Diethanolamin, Propanolamin, Dipropanolamin, Butanolamin und Dibutanolamin genannt.

Als Ausgangskomponente c) werden mindestens eine, vorzugsweise aber zwei bis sechs Hydroxylgruppen aufweisende höhermolekulare Hydroxylverbindungen wie Polyether, Polythioether, Polyacetale, Polyester, Polycarbonate und Polyesteramide vom mittleren Molekulargewicht 200 - 16.000, vorzugsweise 500 - 12.000 eingesetzt.

Die erfindungsgemäß in Frage kommenden, mindestens eine, in der Regel zwei bis acht, vorzugsweise zwei bis sechs, Hydroxylgruppen aufweisenden Polyether sind solche der an sich bekannten Art und werden z.B. durch Polymerisation von Epoxiden wie Ethylenoxid, Propylenoxid, Butylenoxid, Styroloxid oder Epichlorhydrin mit sich selbst, z.B. in Gegenwart von Lewis-Katalysatoren wie $BF_3$ oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin und Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet. Ferner hydroxyfunktionelle Polymerisate des Tetrahydrofurans.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischether, Polythioetherester oder Polythioetheresteramide.

Als Polyacetale kommen z.B. die aus Glykolen, wie Diethylenglykol, Triethylenglykol, 4,4'-Bishydroxyethoxydiphenyldimethylmethan, Hexandiol und Formaldehyd herstellbaren Verbindungen in Frage. Auch die Polymerisation cyclischer Acetale wie z.B. Trioxan (DE-OS 1 694 128) lassen sich erfindungsgemäß geeignete Polyacetale herstellen.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-AS 1 694 080, 1 915 908 und 2 221 751; DE-OS 2 605 024).

Auch bereits Urethan- oder Harnstoffgruppen enthaltende Polyhydroxylverbindungen sowie gegebenenfalls modifizierte natürliche Polyole, wie Rizinusöl sind verwendbar. Auch Anlagerungsprodukte von Alkylenoxiden an Phenol-Formaldehyd-Harze oder auch an Harnstoff-Formaldehydharze sind

erfindungsgemäß einsetzbar.

Vorzugsweise werden Polyether eingesetzt. Die Umsetzung der Polyisocyanate mit den Polyaminen in Polyolen kann nach diskontinuierlichen und kontinuierlichen Verfahren durchgeführt werden. So kann z.B. das Polyol zusammen mit dem Amin bei 20 - 100°C vorgelegt und das Polyisocyanat zugetropft werden, wobei gegebenenfalls durch äußere Kühlung die Reaktionswärme abgeführt wird. Es ist aber auch möglich, nur das Polyol bei 20 - 120°C vorzulegen und Aminkomponente und Isocyanat synchron einzudosieren.

Vorgezogen wird jedoch eine kontinuierliche Herstellungsmethode, wie sie in DE-PS 2 513 815 beschrieben ist, bei der die Umsetzung des Polyisocyanates mit den Aminen in höhermolekularen Polyolen kontinuierlich in einem Durchflußmischer erfolgt und das den Durchflußmischer verlassende Produkt z.B. in einer Vorlage noch 1 - 2 Stunden bei 50 - 150°C nachreagiert und gegebenenfalls im Vakuum entwässert wird.

Erfindungsgemäß kann die Umsetzung der Komponenten a) und b) in Komponente c) in Gegenwart von Zusatzstoffen wie Wasser, niedermolekularen Hydroxylverbindungen vom Molekulargewicht 32 bis 199 wie Alkoholen oder Glykolen, Katalysatoren, Flammschutzmitteln, Emulgatoren, Farbpasten, Stabilisatoren etc. durchgeführt werden (Komponente d)).

Der Möglichkeit, die Reaktion in Gegenwart von 1 - 20% Wasser, bezogen auf den Gesamtansatz, durchzuführen, kommt eine besondere Bedeutung bei, denn sie erlaubt 1. den Einsatz von preisgünstigen Aminen, die handelsüblich in wäßriger Form angeboten werden, 2. wirkt das Wasser insbesondere bei der kontinuierlichen Verfahrensweise durch seine hohe Wärmekapazität als internes Kühlmittel, was insbesondere bei der Herstellung von Dispersionen mit hohen Füllstoffgehalten (hoher Umsatz/Raumeinheit) eine Rolle spielt, 3. Wasser (das gleiche gilt für Alkohole und Glykole) tritt als Partner für Isocyanate in Konkurrenz mit dem Polyol und ermöglicht so die Steuerung des Einbaus von Polyolmolekülen in die Feststoffpartikel. Ein geringfügiger Einbau ist notwendig, damit die Dispersionen sedimentationsstabil sind. Ein erhöhter Einbau führt jedoch zu unerwünschten Viskositätserhöhungen.

Umgekehrt wie Wasser (Alkohole, Glykole) wirkt der Zusatz von Katalysatoren, insbesondere zinnorganischen Verbindungen, der zu einer erhöhten Polyol-Mitreaktion führt. Dies ist z.B. erwünscht, wenn die Umsetzungen mit niedrigem Äquivalentverhältnis und/oder in Polyolen mit überwiegend sekundären Hydroxylgruppen durchgeführt werden. Wie schon betont, sind die Dispersionen wertvolle Ausgangsstoffe für Polyurethankunststoffe. Die erfindungsgemäßen Dispersionen lassen sich beispielsweise zu weichen, halbharten und harten Polyurethanschaumstoffen mit verbesserten Eigenschaften, wie erhöhter Zugfestigkeit und Härte verarbeiten. Zur Herstellung von z.B. Elastomeren, Überzügen und Beschichtungen sind die Dispersionen ebenfalls geeignet. Hierzu werden die erfindungsgemäßen Dispersionen gegebenenfalls in Gegenwart von anderen üblichen Polyolen mit aliphatischen, cycloaliphatischen, araliphatischen, aromatischen und heterocyclischen Polyisocyanaten, wie sie bereits erwähnt worden sind, gegebenenfalls in Gegenwart von Hilfs- und Zusatzmitteln, umgesetzt.

Als weitere Hilfs- und Zusatzmittel werden gegebenenfalls eingesetzt:

Wasser und/oder leicht flüchtige anorganische oder organische Substanzen als Treibmittel. Als organische Treibmittel kommen z.B. Aceton, Ethylacetat, halogensubstituierte Alkane wie Methylenchlorid, Chloroform, Ethylidenchlorid, Monofluortrichlormethan, Chlordifluormethan, Dichlordifluormethan, ferner als anorganische Treibmittel z.B. Luft, $CO_2$ oder $N_2O$, in Frage. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Katalysatoren der an sich bekannten Art, z.B. tertiäre Amine, wie Triethylamin, Tributylamin, N-Methylmorpholin, N-Ethyl-morpholin, N,N,N',N'-Tetramethyl-ethylendiamin, Pentamethyl-diethylentriamin und höhere Homologe (DE-Offenlegungsschriften 2 624 527 und 2 624 528), 1,4-Diazabicyclo-(2,2,2)-octan, N-Methyl-N'-dimethylaminoethylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-ß-phenylethylamin, 1,2-Dimethylimidazol, 2-Methylimidazol, monocyclische und bicyclische Amidine (DE-OS 1 720 633), Bis-(dialkylamino)-alkylether (US-PS 3 330 782, DE-Auslegeschrift 1 030 558, DE-OS 1 804 361 und 2 618 280) sowie Amidgruppen (vorzugsweise Formamidgruppen) aufweisende tertiäre Amine gemäß den DE-OS 2 523 633 und 2 732 292. Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-OS 2 732 292.

Als Katalysatoren kommen ferner Silaamine mit Kohlenstoff-Silicium-Bindungen, wie sie z.B. in der DE-PS 1 229 290 (entsprechend der US-PS 3 620 984) beschrieben sind, in Frage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner

Alkalihydroxide wie Natriumhydroxid, Alkaliphenolate wie Natriumphenolat oder Alkalialkohole wie Natriummethylat in Betracht. Auch Hexahydrotriazine können als Katalysatoren eingesetzt werden (DE-OS 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Azzoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-AS 1 769 367; US-PS 3 645 927) vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlöslicher Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 2 558 523.

Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekannt geworden sind.

Erfindungsgemäß lassen sich auch kalthärtende Schaumstoffe herstellen (vgl. GB-PS 1 162 617, DE-OS 2 153 086).

Selbstverständlich können aber auch Schaumstoffe durch Blockverschäumung oder nach dem an sich bekannten Doppeltransportbandverfahren hergestellt werden.

Die nach dem erfindungsgemäßen Verfahren hergestellten Polyurethan-Kunststoffe werden beispielsweise als Polstermaterialien, Matratzen, Verpackungsmaterialien, stoßabsorbierende Automobilteile, Folien für Kaschierzwecke und als Isolationsmaterialien verwendet. Die nach dem erfindungsgemäßen Verfahren hergestellten hochelastischen Schaumstoffe eignen sich besonders gut zur Flammkaschierung mit Folien, Geweben und Gewirken aus natürlichen und synthetischen Materialien. Folien aus diesen Schaumstoffen lassen sich auch gut durch Hochfrequenz und Ultraschall verschweißen. Die hergestellten harten Polyurethanschaumstoffe eignen sich gut zur Herstellung von Artikeln mit einer Integralstruktur oder von Sandwichelementen.

Die Schaumstoffe können dabei entweder nach dem Formverschäumungsverfahren hergestellt oder durch Konfektionierung aus blockgeschäumten Materialien erhalten werden. Sie lassen sich durch Tiefziehen, Prägen oder Warmverformen verarbeiten.

Das erfindungsgemäße Verfahren wird durch die folgenden Beispiele näher erläutert. Hierbei sind, wenn nicht anders vermerkt, Zahlenangaben als Gew.-% bzw. Gew.-Teile zu verstehen.

Die in den Beispielen benutzten Abkürzungen für die Polyether haben die nachfolgend angegebenen Bedeutungen:

Polyether A: Ein auf Trimethylolpropan oder Glycerin gestarteter Polyether aus Propylenoxid und Ethylenoxid mit der OH-Zahl 34 und ca. 80 Gew.-% primären OH-Gruppen.

Polyether B: Ein auf Trimethylolpropan gestarteter Polyether aus Propylenoxid und Ethylenoxid mit der OH-Zahl 45 und vorwiegend sekundären OH-Gruppen.

Polyether C: Ein auf Glycerin gestarteter Polyether aus Propylenoxid und Ethylenoxid mit der OH-Zahl 56 und ca. 50 Gew.-% primären OH-Gruppen.

Polyether D: Wie Polyether A, jedoch OH-Zahl 28 bei ca. 80 Gew.-% primären OH-Gruppen.

Polyether E: Lineares Polypropylenglykol (OH-Zahl 56) mit sekundären OH-Gruppen.

Polyether F: Lineares Polypropylenglykol, endständig mit Ethylenoxid modifiziert (OH-Zahl 28; ca. 80 Gew.-% primäre OH-Gruppen).

Polyether G: Auf Trimethylolpropan gestartetes Polyethylenoxid (OH-Zahl 550).

Polyether H: Ein auf Trimethylolpropan gestarteter Polyether aus Propylenoxid und Ethylenoxid mit der OH-Zahl 35 und ca. 70 Gew.-% primären OH-Gruppen.

Polyether J: Ein auf Glycerin gestarteter Polyether aus Propylenoxid und Ethylenoxid mit der OH-Zahl 46 und vorwiegend sekundären OH-Gruppen.

Polyether K: Ein auf Trimethylolpropan gestarteter Polyether aus Propylenoxid und Ethylenoxid mit der OH-Zahl 28 und ca. 90 Gew.-% primären OH-Gruppen.

Für die in den Beispielen eingesetzten Polyisocyanate werden folgende Abkürzungen verwendet:

TDI 80: Gemisch aus 80 Gew.-% 2,4- und 20 Gew.-% 2,6-Toluylendiisocyanat
TDI 100: 2,4-Toluylendiisocyanat
TDI 65: Gemisch aus 65 Gew.-% 2,4- und 35 Gew.-% 2,6-Toluylendiisocyanat
Polyisocyanat I: 4,4'-Diphenylmethandiisocyanat mit polymeren Anteilen $\eta_{25^\circ} \sim 100$ mPas
Polyisocyanat II: 4,4'-Diphenylmethandiisocyanat mit polymeren Anteilen $\eta_{25^\circ} \sim 200$ mPas

Andere verwendete Abkürzungen:

TCA: Tris-(2-chlorethyl)-phosphat
DBTL: Dibutylzinndilaurat
KZ: Äquivalentverhältnis Isocyanat zu Amin

In den Beispielen wurden folgende "Michael-Addukte" aus Aminen bzw. Hydrazin und Acrylnitril eingesetzt:

Addukt a: Hydrazinhydrat, Acrylnitril, Molverhältnis 1:1
b: Ethylendiamin 80 gew.-%ige wäßrige Lösung, Acrylnitril, Molverhältnis 1:2
c: wie b, Molverhältnis 2:3
d: Hexamethylendiamin, Acrylnitril, Molverh. 1:1
e: wie d, Molverh. 1:2
f: Bis-(2-aminoethyl)-amin, Acrylnitril, Molverh. 1:2

Zur Herstellung der Additionsverbindungen wurden die Amine bei 20°C vorgelegt und unter Rühren und Eiskühlung das Acrylnitril zugetropft. Durch 2- bis 3-stündiges Nachrühren wurden die Reaktionen vervollständigt (Kontrolle durch Acrylnitril-Spürgerät).

Beispiel 1

8163 g Polyether A wurden zusammen mit 366 g Addukt a bei 80°C unter schnellem Rühren vorgelegt und im Verlauf von 1 h 609 g TDI 80 zugetropft. Nach einer weiteren Stunde war im IR-Spektrum keine NCO-Bande mehr festzustellen. Nun wurde bei 100°C und 1 mbar entwässert. Man erhielt eine 10%ige feinteilige, sedimentationsstabile Dispersion mit einer Viskosität von 7500 mPas bei 25°C.

Beispiel 2

1500 g Polyether A wurden bei 100°C unter schnellem Rühren vorgelegt. Innerhalb von 20 Min. ließ man aus 2 separaten Tropftrichtern 88,4 g TDI 80 und 78,3 g Addukt f synchron eintropfen. Nach weiteren 30 Min. bei 100°C erhielt man eine feinteilige Dispersion mit der Viskosität 3030 mPas bei 25°C.

Beispiel 3

2250 g/Min. Polyether A und 1185 g/Min. Addukt b, dessen ursprünglicher Wassergehalt von 8,3% vorher auf 17,6% angehoben wurde, wurden aus zwei getrennten Vorratsbehältern kontinuierlich in einen Statikmischer gepumpt. Gleichzeitig wurden 750 g/Min. Polyether A und 1024 g/Min. TDI 80 getrennt einem 2. Statikmischer zugeführt. Die beiden Teilströme gelangten getrennt voneinander in die Mischzone eines Stachelrühres (Kammervolumen 0,5 l; Drehzahl 5000 U/Min.), in dem unter exothermer Reaktion die Polyaddition erfolgte. Die den Stachelrührer mit einer Temperatur von 130°C verlassende Dispersion wurde in einem Verweilzeitgefäß gesammelt, wo sie unter schnellem Rühren bei 80 - 100°C für ca. 2 h gehalten wurde. Das enthaltene Wasser wurde schon während dieser Nachrührzeit im Vakuum abdestilliert. Man erhielt eine stabile, weiße, 40%ige Dispersion mit einer Viskosität von 4060 mPas/25°C.

Beispiele 4 - 24

Die folgenden Produkte wurden analog Beispiel 3 hergestellt. Im Falle der Mitverwendung von Wasser wurde dieses dem Amin zugefügt. Die %-Angaben für Zusatzstoffe sind Gew.-% und beziehen sich auf den Gesamtansatz. Die näheren Daten sind der Tabelle 1 zu entnehmen.

| Bsp. | Polyeth. | Isocyanat | Amin | Äq. Verh. | % Feststoff | % $H_2O$ | % TCA | ppm DBTL | $\eta$ 25° (mPas) |
|---|---|---|---|---|---|---|---|---|---|
| 4 | A | TDI 80 | b | 100 | 30 | 4 | - | - | 2515 |
| 5 | A | Polyisocyanat I | b | 105 | 15 | 0,5 | - | 100 | 2420 |
| 6 | A | Polyisocyanat II | b | 125 | 15 | 2 | - | 100 | 3660 |
| 7 | A | Polyisocyanat I | c | 105 | 15 | 0,5 | 2 | 100 | 3125 |
| 8 | A | Polyisocyanat II | c | 105 | 15 | 1 | - | - | 2580 |
| 9 | A | Polyisocyanat I | b | 100 | 20 | 0,5 | - | - | 3480 |
| 10 | A | Polyisocyanat I | b | 105 | 20 | 0,5 | - | - | 4250 |
| 11 | A | TDI 80 | b | 105 | 20 | 0,5 | - | - | 4290 |
| 12 | A | TDI 80 | b | 110 | 20 | 0,5 | - | - | 6580 |
| 13 | A | TDI 80 | c | 105 | 20 | 0,5 | - | - | 3300 |
| 14 | A | TDI 80 | c | 110 | 20 | 0,5 | - | - | 4800 |
| 15 | B | TDI 80 | e | 120 | 20 | 10 | - | - | 1450 |
| 16 | B | TDI 80 | d | 100 | 20 | - | - | - | 2090 |
| 17 | B | TDI 80 | d | 100 | 20 | - | - | 500 | 1900 |
| 18 | B | TDI 80 | c | 110 | 40 | 6 | 2 | 100 | 2550 |
| 19 | B | TDI 80 | c | 100 | 50 | 6 | 2 | 100 | 5850 |
| 20 | B | TDI 80 | c | 110 | 50 | 8 | 2 | 100 | 5600 |
| 21 | C | TDI 65 | b | 110 | 20 | 0,5 | - | 100 | 2030 |
| 22 | D | TDI 100 | b | 105 | 15 | 0,5 | - | 100 | 3120 |
| 23 | E | TDI 65 | c | 115 | 20 | 0,5 | - | 100 | 2950 |
| 24 | F | TDI 80 | c | 110 | 20 | 0,5 | - | 100 | 2800 |

Beispiele 25 - 28 (Verwendungsbeispiele)

Tabelle 2 zeigt die erfindungsgemäße Herstellung von hochtragfähigen Polyurethanblockschaumstoffen. Die Schaumansätze wurden auf einer UBT-Anlage (handelsübliche Vermischungsmaschine) mit einem Polyolausstoß von 30 kg/Min. hergestellt. Die Dosierung der Komponenten erfolge in 4 separaten Strömen:

Polyol bzw. Polyolgemisch, Aktivatorgemisch (Wasser, Aminaktivator, Stabilisator), Isocyanat und Zinnkatalysator.

Tabelle 2:

| Beispiele | | 25 | 26 | 27 | 28 |
|---|---|---|---|---|---|
| Polyoldispersion gemäß Beispiel 18 (40 % Füllstoff) | | 100 | 100 | 50 | 50 |
| Polyether J | | - | - | 50 | 50 |
| $H_2O$ | | 4,0 | 2,0 | 4,0 | 2,0 |
| Stabilisator (Tegostab® B 8002, Goldschmidt AG) | | 1,0 | 0,6 | 1,0 | 0,8 |
| Aminaktivator I (Desmorapid® PS 207, Bayer AG) | | 0,1 | 0,2 | 0,15 | 0,2 |
| Aminaktivator II (Dimethylethanolamin) | | 0,1 | 0,3 | 0,15 | 0,3 |
| Zinn-dioctoat | | 0,15 | 0,12 | 0,18 | 0,15 |
| TDI 80 | | 46,2 | 25,4 | 47,9 | 26,9 |
| Rohdichte | kg/m³ | 27 | 53 | 26 | 49 |
| Zugfestigkeit | kPa | 190 | 255 | 150 | 210 |
| Bruchdehnung | % | 100 | 135 | 145 | 210 |
| Stauchhärte bei 40 % Verformung | kPa | 8,6 | 12,3 | 5,4 | 7,5 |

Beispiele 29 - 31a (Verwendungsbeispiele)

Tabelle 3 zeigt die Herstellung hochelastischer, schrumpffreier und leicht mechanisch aufdrückbarer Schaumstoffe aus den erfindungsgemäßen Dispersionen. Die Schaumansätze wurden als "Handschaum" hergestellt, wobei die Komponenten wie in Tabelle 3 angegeben bis auf das Isocyanat nacheinander in einem Pappbecher eingewogen und mit einem hochtourigen Rührer gut vermischt wurden. In dieser Mi schung wurde die Isocyanatkomponente zugegeben, 10 sec intensiv vermischt und das Gemisch in eine offene Papierform gegeben.

Im Beispiel 31a wird die Herstellung eines Weichschaumes aus einer Polyetherdispersion gemäß DE-PS 2 513 815 (20%ige Dispersion des Polyadditionsproduktes aus TDI 80 und Hydrazinhydrat im Polyether A) zum Vergleich gegenübergestellt. Wie aus der Tabelle ersichtlich, wird mit der erfindungsgemäßen Dispersion aus Beispiel 6, die nur 15% Feststoff enthält, das gleiche Eigenschaftsniveau wie mit der 20%igen Dispersion gemäß DE-DB 2 513 815 erreicht.

Tabelle 3

| Beispiele | | 29 | 30 | 31 | 31a (Vergleich) |
|---|---|---|---|---|---|
| Polydispersion gemäß Beispiel 6 | | 100 | 44 | 33 | |
| Polydispersion gemäß DE-PS 2 513 815 | | | | | 100 |
| Polyether H | | - | 56 | 67 | - |
| Wasser | | 3,0 | 3,0 | 3,5 | 3,0 |
| Diethanolamin | | 1,2 | 1,2 | 1,5 | 1,2 |
| Stabilisator (chlorhaltiger Polysiloxanstab.) | | 0,5 | 0,5 | 0,8 | 0,5 |
| Aminaktivator I (Dabco® 33 LV, Air Prod.) | | 0,2 | 0,2 | 0,2 | 0,2 |
| Aminaktivator II (Catalyst A1 (UCC)) | | - | 0,05 | 0,05 | - |
| Trichlorethylphosphat | | 2,0 | 2,0 | 2,0 | 2,0 |
| Zinn-dioctoat | | 0,18 | 0,11 | 0,17 | 0,18 |
| Trichlormonofluormethan | | - | - | 15 | - |
| Toluylendiisocyanat (TDI 80) | | 39,7 | 40,0 | 46,2 | 39,7 |
| Rohdichte | kg/m³ | 33 | 33 | 20 | 33 |
| Zugfestigkeit | kPa | 130 | 115 | 100 | 125 |
| Bruchdehnung | % | 120 | 125 | 175 | 120 |
| Stauchhärte bei 40 % Verformung | kPa | 5,0 | 3,8 | 1,6 | 4,3 |
| Recovery | % | 80 | 82 | 80 | 78 |
| SAG-Faktor | | 2,6 | 2,6 | 2,7 | 2,5 |

<u>Tabelle 4</u>

<u>Beispiele 32 - 34</u> (Verwendungsbeispiele):

Tabelle 4 zeigt die erfindungsgemäße Herstellung von weichelastischen, tragfähigen Formschaumstoffteilen (Verschäumung in geschlossenen Formen nach dem Stand der Technik).

| Beispiele: | 32 | 33 | 34 |
|---|---|---|---|
| Polyether D | 50 | 50 | 50 |
| Polyetherdispersion gem. | | | |
| Beispiel 7 | 50 | - | - |
| Beispiel 10 | - | 50 | - |
| Beispiel 12 | - | - | 50 |
| $H_2O$ | 3,2 | 3,2 | 3,2 |
| Aminkatalysator | | | |
| (Catalyst A 1 (UCC)) | 0,1 | 0,1 | 0,1 |
| Aminkatalysator | | | |
| (Dabco® 33 LV (Air Products)) | 0,5 | 0,5 | 0,5 |
| Siloxan-Stabilisator (KS 43 (Bayer AG)) | 1,0 | 1,0 | 1,0 |
| TDI/MDI-Gemisch, Kennzahl | 105 | 105 | 105 |
| Rohdichte ($kg/m^3$) | 39 | 38 | 38 |
| Zugfestigkeit (kPa) | 120 | 130 | 125 |
| Bruchdehnung (%) | 145 | 150 | 145 |
| Stauchhärte (50) (kPa) | 5,0 | 4,1 | 4,1 |

Beispiele 35 - 37 (Verwendungsbeispiele)

Herstellung von massiven PU-Formkörpern nach dem RIM-Verfahren.

Beispiel 35

77 Gew.-Teile Polyoldispersion gemäß Beispiel 4

0,2 Gew.-Teile Dibutylzinndilaurat

23 Gew.-Teile eines aromatischen Diamins, hergestellt durch Alkylierung eines technischen Gemisches von 2,4- und 2,6-Diamino-1-methylbenzol

wurden gut vermischt. 100 Gew.-Teile dieses Polyolgemisches wurden nach dem bekannten RIM-Verfahren nach Hochdruckvermischen mit 60 Gew.-Teilen eines NCO-Gruppen aufweisenden Umsatzungsprodukts von 4,4'-Diphenylmethan-diisocyanat mit unterschüssigen Mengen eines äquimolaren Gemischs aus Di- und Tripropylenglykol, NCO-Gehalt: 23 Gew.-%, in ein Plattenwerkzeug eingefüllt.

Beispiel 36

Anstelle der Polyoldispersion gemäß Beispiel 4 wurde eine solche gemäß Beispiel 3 eingesetzt.

Beispiel 37 (Vergleichsbeispiel)

Hier wurde anstelle einer Polyoldispersion der Polyether K eingesetzt.

In Tabelle 4 sind die mechanischen Daten der erfindungsgemäßen Beispiele sowie des Vergleichsbeispiels zusammengestellt, ferner ist die Zahl der möglichen Entformungen nach einmaligem Eintrennen aufgeführt.

| Beispiele | 35 | 36 | 37 (Vergleich) |
|---|---|---|---|
| Dichte kg/m³ DIN 53 420 | 1100 | 1100 | 1100 |
| Zugfestigkeit MPa DIN 53 504 | 40 | 42 | 28 |
| Bruchdehnung % DIN 53 504 | 150 | 120 | 300 |
| Shore-D-Härte DIN 53 505 | 70 | 73 | 57 |
| Zahl der Entformungen | 10 | 10 | 5 |

Man ersieht, daß bei Anwendung der erfindungsgemäßen Dispersionen eine deutliche Härtesteigerung sowie etwa doppelt soviele Entformungen erreicht werden können.

**Patentansprüche**

1. Stabile Dispersion von Polyharnstoffen und/oder Polyhydrazodicarbonamiden in höhermolekularen, mindestens eine Hydroxylgruppe aufweisenden Hydroxylverbindungen, mit Feststoffgehalten von 5 bis 50 Gew.-%, erhalten durch Umsetzung von

a) Polyisocyanaten, gegebenenfalls in Mischung mit bis zu 40 Mol-% Monoisocyanaten, mit

b) primäre und/oder sekundäre Aminogruppen aufweisenden Polyaminen und/oder Hydrazinen und/oder Hydraziden, gegebenenfalls in Mischung mit bis zu 40 Mol-% Monoaminen oder Alkanolaminen, wobei Komponente b) zu mindestens 50 Gew.-% aus Additionsprodukten von Acrylnitril an Hydrazin und/oder an aliphatische, cycloaliphatische oder araliphatische mindestens zwei primäre Aminogruppen enthaltende Di- oder Polyamine besteht, zu deren Herstellung pro Mol Di- oder Polyamin mindestens 1 Mol Acrylnitril und für jedes der in den Di- oder Polyaminen enthaltenen Stickstoffatome höchstens 1 Mol Acrylnitril eingesetzt worden ist, bei Temperaturen von 20 bis 170°C und einem Äquivalentverhältnis der Komponenten a) und b) zwischen 0,8 und 1,5 in

c) mindestens eine Hydroxylgruppe aufweisenden Hydroxylverbindung mit einem mittleren Molekulargewicht von 200—16000, gegebenenfalls

d) in Gegenwart von Wasser, niedermolekularen Hydroxylverbindungen, Katalysatoren, Flammschutzmitteln und weiteren Hilfsmitteln.

2. Stabile Dispersionen gemäß Anspruch 1, bei denen die Komponente c) aus höhermolekularen Polyethern besteht, deren OH-Gruppen zu mindestens 95% sekundär sind, erhalten mit Feststoffgehalten von 5 bis 30 Gew.-% bei einem Äquivalentverhältnis der Komponenten a) und b) zwischen 0,8 und 1,5 und mit Feststoffgehalten von 30 bis 50 Gew.-% bei einem Äquivalentverhältnis zwischen 0,8 und 1,3.

3. Stabile Dispersionen gemäß Anspruch 1, bei denen die Komponente c) aus höhermolekularen Polyethern besteht, deren OH-Gruppen zu mindestens 20% primär sind, erhalten mit Feststoffgehalten von 5 bis 15 Gew.-% bei einem Äquivalentverhältnis der Komponenten a) und b) zwischen 0,8 und 1,3 und mit Feststoffgehalten von 15 bis 40 Gew.-% bei einem Äquivalentverhältnis zwischen 0,8 und 1,1.

4. Verfahren zur Herstellung von stabilen Dispersionen von Polyharnstoffen und/oder Polyhydrazodicarbonamiden in mindestens eine Hydroxylgruppe aufweisenden höhermolekularen Hydroxylverbindungen, vorzugsweise Polyethern, mit Feststoffgehalten von 5 bis 50 Gew.-%, durch Umsetzung von Polyisocyanaten mit primäre und/oder sekundäre Aminogruppen aufweisenden Polyaminen und/oder Hydrazinen und/oder Hydraziden in mindestens eine Hydroxylgruppe aufweisenden höhermolekularen Hydroxylverbindungen, dadurch gekennzeichnet, daß man

a) Di- oder Polyisocyanate, gegebenenfalls in Mischung mit bis zu 40 Mol-% Monoisocyanaten, kontinuierlich oder diskontinuierlich mit

b) primäre und/oder sekundäre Aminogruppen aufweisenden Polyaminen und/oder Hydrazinen und/oder Hydraziden, gegebenenfalls in Mischung mit bis zu 40 Mol-% Monoaminen oder Alkanolaminen, wobei Komponente b) zu mindestens 50 Gew.-% aus Additionsprodukten von Acrylnitril an Hydrazin und/oder an aliphatische, cycloaliphatische oder araliphatische mindestens 2 primäre Aminogruppen enthaltende Di- oder Polyamine besteht, bei deren Herstellung pro Mol Di- oder Polyamin mindestens 1 Mol Acrylnitril und für jedes der in den Di- oder Polyaminen enthaltenen Stickstoffatome höchstens 1 Mol Acrylnitril eingesetzt worden ist, bei einem Äquivalentverhältnis der Komponenten a) und b) zwischen 0,8 und 1,5 und bei Temperaturen von 20 bis 170°C in

c) mindestens eine Hydroxylgruppe aufweisenden höhermolekularen Hydroxylverbindungen mit einem mittleren Molekulargewicht von 200 bis 16000, gegebenenfalls

d) in Gegenwart von Wasser, niedermolekularen Alkoholen, Katalysatoren, Flammschutzmitteln und weiteren Hilfsmitteln umsetzt.

5. Verfahren gemäß Anspruch 4, dadurch gekennzeichnet, daß die Umsetzung der Komponenten a) und b) in Komponente c), gegebenenfalls in Gegenwart von Komponente d), kontinuierlich durchgeführt wird.

6. Verfahren zur Herstellung von gegebenenfalls geschäumten Polyurethankunststoffen, insbesondere von Weichschaumstoffen, durch Umsetzung von Polyisocyanaten mit höhermolekularen Hydroxylverbindungen, gegebenenfalls in Gegenwart von Wasser und/oder leichtflüchtigen organischen Substanzen als Treibmittel sowie gegebenenfalls unter Mitverwendung von Katalysatoren, Schaumhilfs- und Zusatzmitteln und Kettenverlängerungs- und/oder Vernetzungsmitteln, dadurch gekennzeichnet, daß als höhermoleckulare Hydroxylverbindungen ausschließlich oder anteilweise Dispersionen gemäß Ansprüchen 1—3 eingesetzt werden.

**Revendications**

1. Dispersions stables de polyurées et/ou de polyhydrazodicarboxamides dans des composés hydroxyliques de poids moléculaire élevé, présentant au moins un groupe hydroxyle, avec des teneurs en matières solides de 5 à 50% en poids, obtenues par réaction

a) de polyisocyanates, éventuellement en mélange avec jusqu'à 40 moles %, de monoisocyanates, avec

b) des polyamines portant des groupes amino primaires et/ou secondaires et/ou des hydrazines et/ou des hydrazides, le cas échéant en mélange avec jusqu'à 40 moles % de mono-amines ou d'alcanolamines, le composant b) étant constitué en proportion d'au moins 50% en poids de produits d'addition d'acrylonitrile sur l'hydrazine et/ou sur des diamines ou des polyamines aliphatiques, cycloaliphatiques ou araliphatiques contenant au moins deux groupes amino primaires, pour la préparation desquelles il a été utilisé, par mole de diamine ou de polyamine, au moins une mole d'acrylonitrile, et pour chacun des atomes d'azote contenus dans les diamines ou dans les polyamines, au maximum 1 mole d'acrylonitrile, à des températures de 20 à 170°C et avec un rapport d'équivalents des composants a) et b) compris entre 0,8 et 1,5 dans

c) un composé hydroxylique portant au moins un groupe hydroxy, ayant un poids moléculaire moyen de 200 à 16 000, le cas échéant

d) en présence d'eau, de composés hydroxyliques de bas poids moléculaire, de catalyseurs, d'agents retardateurs de flamme et d'autres substances auxiliaires.

2. Dispersions stables suivant la revendication 1, dans lesquelles le composant c) est constitué de polyéthers de poids moléculaire élevé, dont les groupes OH sont secondaires en proportion d'au moins 95%, obtenues avec des teneurs en matières solides de 5 à 30% en poids pour un rapport d'équivalents des composants a) et b) compris entre 0,8 et 1,5 et des teneurs en matières solides de 30 à 50% en poids pour un rapport d'équivalents compris entre 0,8 et 1,3.

3. Dispersions stables suivant la revendication 1, dans lesquelles le composant c) est constitué de

polyéthers de poids moléculaire élevé dont les groupes OH sont primaires en proportion d'au moins 20%, obtenues avec des teneurs en matières solides de 5 à 15% en poids pour un rapport d'équivalents des composants a) et b) compris entre 0,8 et 1,3 et avec des teneurs en matières solides de 15 à 40% en poids pour un rapport d'équivalents compris entre 0,8 et 1,1.

4. Procédé de production de dispersions stables de polyurées et/ou de polyhydrazodicarboxamides dans des composés hydroxyliques de poids moléculaire élevé présentant au moins un groupe hydroxyle, de préférence des polyéthers, avec des teneurs en matières solides de 5 à 50% en poids, par réaction de polyisocyanates avec des polyamines portant des groupes amino primaires et/ou secondaires et/ou des hydrazines et/ou des hydrazides dans des composés hydroxyliques de poids moléculaire élevé portant au moins un groupe hydroxyle,

caractérisé en ce qu'on fait réagir:

a) des diisocyanates ou des polyisocyanates, éventuellement en mélange avec jusqu'a 40 moles % de mono-isocyanates, en continu ou en discontinu avec

b) des polyamines portant des groupes amino primaires et/ou secondaires et/ou des hydrazines et/ou des hydrazides, le cas échéant en mélangeant jusqu'à 40 moles % de mono-amines ou d'alcanolamines, le composant b) étant constitué en proportion d'au moins 50% en poids de produits d'addition d'acrylonitrile sur l'hydrazine et/ou sur des diamines ou des polyamines aliphatiques, cycloaliphatiques ou araliphatiques contenant au moins deux groupes amino primaires, pour la préparation desquelles il a été utilisé, par mole de diamine ou de polyamine, au moins une mole d'acrylonitrile et, pour chacun des atomes d'azote contenus dans les diamines ou les polyamines, au maximum une mole d'acrylonitrile, pour un rapport d'équivalents des composants a) et b) compris entre 0,8 et 1,5 et à des températures de 20 à 170°C, dans

c) des composés hydroxyliques de poids moléculaire élevé, porteurs d'au moins un groupe hydroxyle, avec un poids moléculaire moyen de 200 à 16 000, le cas échéant

d) en présence d'eau, d'alcools de bas poids moléculaire, de catalyseurs, d'agents retardateurs de flamme et d'autres substances auxiliaires.

5. Procédé suivant la revendication 4, caractérisé en ce qu'on conduit en continu la réaction des composants a) et b) dans le composant c), éventuellement en présence de composant d).

6. Procédé de production de matières plastiques du type polyuréthanne éventuellement transformées en mousse, notamment de mousses souples, par réaction de polyisocyanates avec des composés hydroxyliques de poids moléculaire élevé, éventuellement en présence d'eau et/ou de substances organiques très volatiles comme agents porogènes ainsi que, le cas échéant, en utilisant simultanément des catalyseurs, des substances auxiliaires et des additifs pour mousse et des agents d'allongement de chaîne et/ou des agents de réticulation, caractérisé en ce qu'on utilise comme composés hydroxyliques de poids moléculaire élevé exclusivement ou partiellement des dispersions selon les revendications 1 à 3.

**Claims**

1. Stable dispersions of polyureas and/or polyhydrazodicarbonamides in relatively high molecular weight hydroxyl compounds containing at least one hydroxyl group having solids contents of from 5 to 50% by weight and obtained by reaction of

a) polyisocyanates, optionally in admixture with up to 40 mol-% monoisocyanates, with

b) polyamines containing primary and/or secondary amino groups and/or hydrazines and/or hydrazides, optionally in admixture with up to 40 mol-% monoamines or alkanolamines, at least 50% by weight of component b) consisting of adducts of acrylonitrile with hydrazine and/or with aliphatic, cycloaliphatic or araliphatic diamines or polyamines containing at least two primary amino groups, which have been produced using at least 1 mol acrylonitrile per mol diamine or polyamine and at most 1 mol acrylonitrile for each of the nitrogen atoms present in the diamines or polyamines, at temperatures of 20 to 170°C and with an equivalent ratio between components a) and b) of 0.8 to 1.5:1 in

c) hydroxyl compounds containing at least one hydroxyl group and having an average molecular weight of 200 to 16,000, optionally

d) in the presence of water, low molecular weight hydroxyl compounds, catalysts, flameproofing agents and other auxiliaries.

2. Stable dispersions as claimed in claim 1, in which component c) consists of relatively high molecular weight polyethers in which at least 95% of the OH groups are secondary OH groups, obtained with solids contents of 5 to 30% by weight for an equivalent ratio between components a) and b) of from 0.8 to 1.5:1 and with solids contents of 30 to 50% by weight for an equivalent ratio of from 0.8 to 1.3:1.

3. Stable dispersions as claimed in claim 1, in which component c) consists of relatively high molecular weight polyethers in which at least 20% of the OH groups are primary, obtained with solids contents of 5 to 15% by weight for an equivalent ratio between components a) and b) of from 0.8 to 1.3:1 and with solids contents of 15 to 40% by weight for an equivalent ratio of from 0.8 to 1.1:1.

4. A process for the production of stable dispersions of polyureas and/or polyhydrazodicarbonamides in relatively high molecular weight hydroxyl compounds containing at least one hydroxyl group, preferably polyethers, having solids contents of 5 to 50% by weight by reaction of polyisocyanates with polyamines containing primary and/or secondary amino groups and/or hydrazines and/or hydrazides in relatively high molecular weight hydroxyl compounds containing at least one hydroxyl group, characterized in that

a) di- or polyisocyanates, optionally in admixture with up to 40 mol-% monoisocyanates, are reacted continuously or discontinuously with

b) polyamines containing primary and/or secondary amino groups and/or hydrazines and/or hydrazides, optionally in admixture with up to 40 mol-% monoamines or alkanolamines, at least 50% by weight of component b) consisting of adducts of acrylonitrile with hydrazine and/or with aliphatic, cycloaliphatic or araliphatic diamines or polyamines containing at least two primary amino groups, which have been produced using at least 1 mol acrylonitrile per mol diamine or polyamine and at most 1 mol acrylonitrile for each of the nitrogen atoms present in the diamines or polyamines, at temperatures of 20 to 170°C and with an equivalent ratio between components a) and b) of 0.8 to 1.5:1 in

c) relatively high molecular weight hydroxyl compounds containing at least one hydroxyl group and having an average molecular weight of 200 to 16,000, optionally

d) in the presence of water, low molecular weight hydroxyl compounds, catalysts, flameproofing agents and other auxiliaries.

5. A process as claimed in claim 4, characterized in that the reaction of components a) and b) in component c), optionally in the presence of component d), is carried out continuously.

6. A process for the production of optionally foamed polyurethane plastics, more particularly flexible foams, by reaction of polyisocyanates with relatively high molecular weight hydroxyl compounds, optionally in the presence of water and/or readily volatile organic substances as blowing agents and optionally using catalysts, foam auxiliaries and additives and chain-extending agents and/or crosslinking agents, characterized in that the dispersions claimed in claims 1 to 3 are used exclusively or partly as the relatively high molecular weight hydroxyl compounds.